(19) **Europäisches Patentamt**
**European Patent Office**
**Office européen des brevets**

(11) Numéro de publication: **0 408 140 A1**

# DEMANDE DE BREVET EUROPEEN

(21) Numéro de dépôt: 90201840.7

(22) Date de dépôt: 09.07.90

(51) Int. Cl.⁵: **F16B 5/02, H05K 5/00, H04B 1/08**

(30) Priorité: 11.07.89 FR 8909316

(43) Date de publication de la demande:
16.01.91 Bulletin 91/03

(84) Etats contractants désignés:
**DE FR GB**

(71) Demandeur: **LA RADIOTECHNIQUE-PORTENSEIGNE**
**51, Rue Carnot BP 301**
**F-92156 Suresnes Cédex(FR)**
(84) **FR**

Demandeur: **N.V. Philips' Gloeilampenfabrieken**
**Groenewoudseweg 1**
**NL-5621 BA Eindhoven(NL)**
(84) **DE**

(72) Inventeur: **Lopez, Claude, Societé Civile S.P.I.D.**
**156 boulevard Haussmann**
**F-75008 Paris(FR)**

(74) Mandataire: **Hoarau de La Source, Jean Marie Pierre et al**
**Société Civile S.P.I.D. 156, Boulevard Haussmann**
**F-75008 Paris(FR)**

(54) **Dispositif de positionnement de composant électrique et son utilisation.**

(57) Un composant électrique comportant un axe fileté est fixé au moyen d'un écrou muni d'un tronc de cône, lequel coopère, pour un positionnement répétitif lors du montage, avec la découpe de deux arcs de cercles dans le support.

Application : Appareils audio ou vidéo avec un bouton de réglage du composant.

FIG. 3b

# DISPOSITIF DE POSITIONNEMENT DE COMPOSANT ELECTRIQUE ET SON UTILISATION.

La présente invention a pour objet un dispositif de positionnement d'un composant électrique comportant sur un même axe un filetage et un épaulement en vue de sa fixation sur un support par un écrou de serrage, le dit support comportant une ouverture en forme de fente avec deux bords sensiblement parallèles agencée pour permettre le montage/démontage du composant perpendiculairement à son axe, et pour que les bords servent d'appui au dit écrou de serrage.

Un tel dispositif est notamment utilisé dans des appareils audio ou vidéo comportant, par exemple, un potentiomètre de réglage accessible à l'usager au moyen d'un bouton rotatif de réglage qui traverse une façade décorative; pour des besoins de montage/démontage du circuit imprimé, l'axe du composant est introduit, avec jeu, dans une fente aménagée dans la plaque support; en outre dans de tels appareils, le composant électrique est généralement solidaire, par soudure, d'un circuit imprimé relativement souple et dont le positionnement par rapport à la façade n'est pas assez précis pour éviter un frottement nuisible entre le bouton et la façade.

La présente invention a pour but de remédier à ces inconvénients.

A cet effet un dispositif conforme à l'invention est particulièrement remarquable en ce que la dite fente est partiellement élargie sur chacun de ses bords par deux arcs d'un même cercle, et en ce que le dit écrou comporte sur sa face de serrage un chanfrein en forme de tronc de cone coaxial à l'écrou, la base du dit tronc de cône ayant un diamètre égal au diamètre du dit cercle formé par les dits arcs.

Ainsi lors du serrage de l'écrou de fixation, le chanfrein coopère avec les deux arcs de cercle pour progressivement assurer, en plus du serrage, le positionnement de l'axe du composant électrique qui vient se placer au centre du cercle pendant que sa perpendicularité est assurée par les faces d'appui; la souplesse du circuit imprimé et des pattes soudées du composant se prête bien à cette opération.

L'opération de serrage s'effectue remarquablement lorsque l'angle au sommet du cône est de 60°, et aussi lorsque la longueur de l'écrou est au moins égale au diamètre du filetage; un tel écrou n'est pas celui qui est habituellement livré avec le composant.

Pour faciliter le montage du dispositif, notamment en usine, il est avantageux que l'écrou soit symétrique c'est-à-dire qu'il comporte un même chanfrein sur chaque face ce qui évite d'avoir à l'orienter.

Un tel écrou, lors du serrage, pénètre dans la fente du support notamment par son cône lequel entoure l'axe du composant; il est alors avantageux que les filets de l'écrou soient interrompus par un dégagement en forme d'alésage coaxial dont le diamètre est légèrement supérieur au diamètre du fond des filets.

Ainsi on évite que les filets de l'écrou viennent buter sur la partie non filetée de l'axe du composant à l'approche de son épaulement.

Généralement le support est une plaque de métal embouti; dans ce cas les formes du support sont obtenues par poinconnage et il est avantageux que les arcs de cercle soient poinconnés dans un sens tel que la bavure de poinconnage est, après montage, située sur la face en appui sur le dit épaulement du composant.

Ainsi, lors du serrage, le cône de l'écrou sera guidé en douceur par l'arrondi de poinconnage situé sur la face du support opposée à la bavure.

La présente invention sera bien comprise avec un exemple de réalisation non limitatif ci-après décrit et illustré par les figures suivantes :

La figure 1 montre un montage connu.

La figure 1a montre en projection latérale un détail connu de la figure 1.

Les figures 2a et 2b montrent deux écrous selon l'invention.

Les figures 3a et 3b montrent un support selon l'invention.

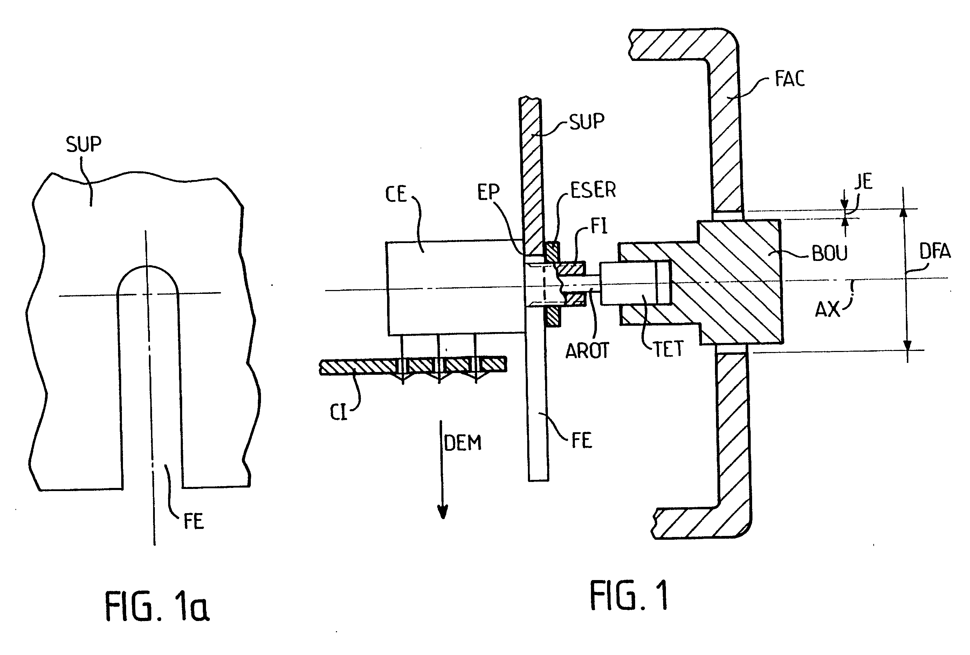

Sur la figure 1 on voit en coupe un circuit imprimé CI sur lequel est soudé un composant électrique CE, par exemple un potentiomètre; le potentiomètre comporte un axe rotatif AROT avec lequel s'effectue le réglage; l'axe rotatif pivote à l'intérieur d'un tube FI fileté extérieurement et solidaire de l'enveloppe du composant CE; ce composant, qui comporte un épaulement EP, est rigidement fixé, par exemple sur une plaque support SUP, au moyen d'un écrou de serrage ESER; si on prend l'exemple non limitatif d'un auto-radio, la plaque support est en métal, et elle fait partie d'un boîtier qui entoure le circuit imprimé pour faire office de blindage; dans ce cas le montage/démontage du circuit imprimé s'effectue perpendiculairement DEM à l'axe du composant électrique au moyen d'une fente FE aménagée dans le support SUP telle que montrée sur la figure 1a; le réglage du potentiomètre est mis à la disposition de l'usager au moyen d'un bouton BOU, emmanché à fort sur un téton TET de l'axe AROT, et apparent à travers un dégagement circulaire DFA de la façade esthétique FAC.

Sur la figure 1, les divers éléments sont idéalement alignés et un seul axe AX est représenté, mais dans la pratique, compte tenu des aléas et des tolérances de fabrication et des divers modèles de façade, les divers axes de la fente, du composant, du bouton et du trou de la façade ne sont pas alignés et il arrive fréquemment que le bouton, soit frotte contre la façade ce qui nuit à son fonctionnement, soit est inesthétique du fait de son excentration quand le jeu JE n'est pas uniformément réparti dans le dégagement.

Le même problème se pose si la façade est parallèle à l'axe AX et que seule une partie du bouton BOU est latéralement apparente à travers un dégagement rectangulaire et biseauté aménagé dans la façade.

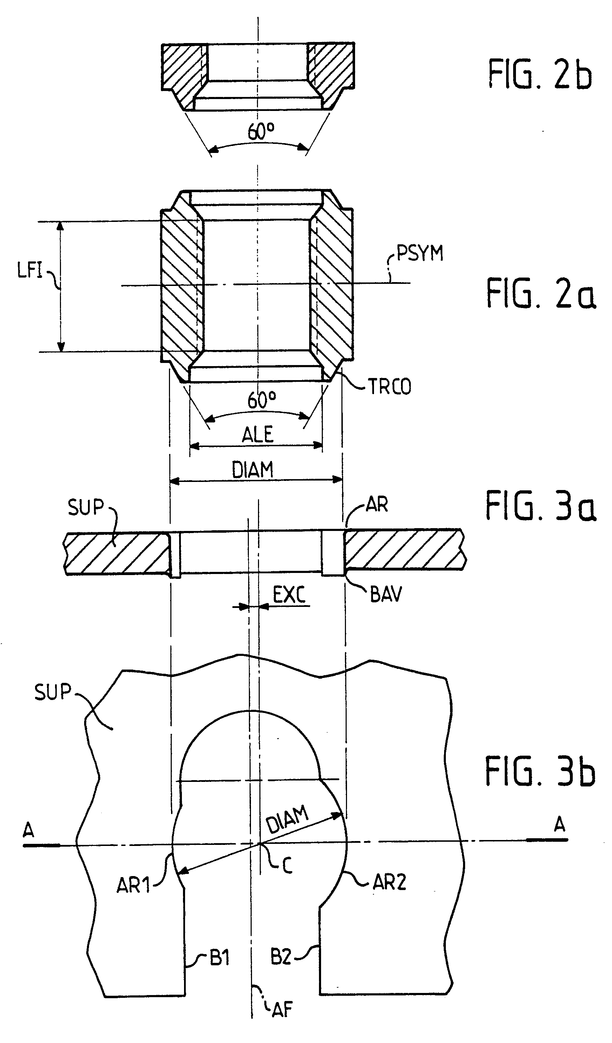

Selon l'invention la fente du support est aménagée, telle que représentée sur la figure 3b, pour coopérer avec un écrou tel que celui de la figure 2a; la figure 2b représente une variante de l'écrou.

Sur la figure 3b, on voit que les bords B1, B2 de la fente sont partiellement élargis par deux arcs ARt, AR2 d'un même cercle de diamètre DIAM dont le centre C n'est pas nécessairement situé sur l'axe AF de la fente; ces arcs de cercle ont pour but de guider le positionnement de l'écrou lors du serrage, lequel écrou comporte un tronc de cône TRCO dont le diamètre est à la base égal à DIAM; ainsi lors du serrage, le tronc de cône s'engage progressivement dans les arcs de cercle du support ce qui garantit une excellente reproductivité du positionnement du composant électrique sur le support.

Pour que l'écrou se positionne aisément lors du serrage sur la chaine de montage, il est avantageux que :

a) l'angle au sommet du cône soit de l'ordre de 60° comme représenté sur la figure 2a,

b) l'écrou soit symétrique par rapport au plan de symétrie PSYM, ainsi il n'y a pas d'opération d'orientation de l'écrou,

c) la bavure de poinçonnage BAV représentée sur la figure 3a soit sur la face en appui sur l'épaulement du composant, ainsi le tronc de cône pénètre en douceur par la face où il y a un arrondi AR de poinçonnage,

d) l'écrou ait une partie filetée LFI d'une longueur telle qu'elle serve de guidage axial pour l'écrou lors du montage, ainsi l'écrou ne se met pas de travers; ceci est possible du fait de la présence, comme représenté sur la figure 1, du téton TET dont le diamètre permet le passage et le guidage de l'écrou; lorsque la longueur de l'écrou est au moins égale au diamètre du filetage, un guidage satisfaisant est obtenu,

e) l'écrou comporte un léger alésage ALE, figure 2a, pour dégager les filets et éviter que ceux-ci ne butent sur la petite partie non filetée de l'axe FI du composant à l'approche de son épaulement EP.

Les avantages procurés par les points a, b, c, d, e, ci-dessus ne sont pas tous indispensables et divers autres écrous peuvent convenir par exemple celui de la figure 2b lequel n'est pas symétrique et n'a pas de longueur de guidage satisfaisante; cet écrou permet encore le positionnement selon l'invention mais il ne facilite pas les opérations de montage sur la chaine de fabrication.

Lors du serrage de l'écrou, celui-ci sera donc toujours concentrique aux arcs de cercle AR1, AR2 centrés sur le point C; la position du point C est déterminée par le poinçonnage du support, et il est clair que d'un support à l'autre, par exemple pour des appareils ayant une même structure interne mais des façades différentes, il est possible de jouer sur le positionnement du point C par rapport à l'axe de la fente pour s'adapter aux variantes; cette adaptation s'effectue économiquement dans la mesure où l'outil de découpe du support a été prévu avec un réglage de la position du point C, notamment de son excentration EXC.

**Revendications**

1. Dispositif de positionnement d'un composant électrique comportant sur un même axe un filetage et un épaulement en vue de sa fixation sur un support par un écrou de serrage, le dit support comportant une ouverture en forme de fente avec deux bords sensiblement parallèles agencée pour permettre le montage/démontage du composant perpendiculairement à son axe, et pour que les bords servent d'appui au dit écrou de serrage, caractérisé en ce que la dite fente est partiellement élargie sur chacun de ses bords par deux arcs d'un même cercle, et en ce que le dit écrou comporte sur sa face de serrage un chanfrein en forme de tronc de cone coaxial à l'écrou, la base du dit tronc de cone ayant un diamètre égal au diamètre du dit cercle formé par les dits arcs.

2. Dispositif selon la revendication 1 caractérisé en ce que l'angle au sommet du dit cone est de 60°.

3. Dispositif selon la revendication 1 ou 2, caractérisé en ce que la longueur de l'écrou est au moins égale au diamètre du filetage.

4. Dispositif selon la revendication 1, 2 ou 3 caractérisé en ce que le dit écrou comporte en outre sur la face opposée au dit chanfrein, un autre chanfrein similaire de telle sorte que l'écrou se monte indifféremment dans les deux sens.

5. Dispositif selon la revendication 1, 2, 3 ou 4 caractérisé en ce que le dit écrou comporte en outre sur le(s) côté(s) muni(s) d'un chanfrein, un dégagement en forme d'alésage coaxial dont le diamètre est légèrement supérieur au diamètre du fond des filets.

6. Dispositif selon la revendication 1, 2, 3, 4 ou 5, le dit support étant une plaque de métal embouti caractérisé en ce que les dits arcs de cercle sont poinçonnés dans un sens tel que la bavure de poinçonnage est, après montage, située sur la face en appui sur le dit épaulement du composant.

7. Dispositif selon la revendication 1, 2, 3, 4, 5 ou 6 caractérisé en ce que le centre du dit cercle est excentré par rapport à l'axe des deux bords de la dite fente.

8. Application du dispositif selon l'une quelconque des revendications précédentes dans des autoradios de différents modèles dans lesquels la même plaque support est utilisée avec des excentrations du dit cercle adaptées respectivement pour chaque modèle.

FIG. 1a

FIG. 1

EP 0 408 140 A1

FIG. 2b

FIG. 2a

LFI

PSYM

60°

TRCO

60°

ALE

DIAM

FIG. 3a

SUP

AR

EXC

BAV

SUP

FIG. 3b

A

DIAM

C

A

AR1

AR2

B1

B2

AF

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3922047 (T. T. TSUJI) <br> * colonne 2, ligne 15 – colonne 4, ligne 28; figures 1-5 * <br> --- | 1, 8 | F16B5/02 <br> H05K5/00 <br> H04B1/08 |
| A | US-A-2821566 (V. H. WILEY) <br> * colonne 3, ligne 52 – colonne 4, ligne 3; figure * <br> --- | 1, 8 | |
| A | DE-A-2651262 (AUDI NSU AUTO UNION) <br> * page 4, alinéa 1; revendication ; figures 1, 2 * <br> --- | 1 | |
| A | US-A-4671583 (OLSON ET AL.) <br> ----- | | |

**DOMAINES TECHNIQUES RECHERCHES (Int. Cl.5)**

F16B
H05K
H04B
H01C

Le présent rapport a été établi pour toutes les revendications

| Lieu de la recherche | Date d'achèvement de la recherche | Examinateur |
|---|---|---|
| LA HAYE | 03 SEPTEMBRE 1990 | PUHL A.T. |

EPO FORM 1503 03.82 (P0402)